# EUROPEAN PATENT SPECIFICATION

(11) **EP 0 778 650 B1**
(45) Date of publication and mention of the grant of the patent: **12.09.2001**
(21) Application number: 96308872.9
(22) Date of filing: 06.12.1996
(51) Int. Cl.: H02K 5/15, H02K 5/16

(54) **Electric motor**
Elektromotor
Moteur électrique

(30) Priority: 08.12.1995 GB 9525098
(43) Date of publication of application: 11.06.1997
(73) Proprietor: Johnson Electric S.A., 2300 La Chaux-de-Fonds (CH)
(72) Inventor: Strobl, Georg, D-70184 Stuttgart (DE)
(74) Representative: Higgins, Michael Roger

(56) References cited:
- US-A- 4 795 931
- US-A- 5 061 869

## Description

### Field of the Invention

The invention relates to an arrangement for aligning a rotor and stator core of an electric motor and has particular application to switched reluctance motors having stator cores comprising a plurality of individual laminated pole pair cores fixed to a pair of brackets supporting bearings for the rotor.

### Background of the Invention

In most electric motors and especially in switched reluctance motors, the performance or efficiency of the motor is affected by the size of the air gap, the gap between the stator core and the rotor core through which the magnetic field must pass. The larger the gap, the higher the resistance of the magnetic path leading to a decrease in motor efficiency. In switched reluctance motors, the size of this gap is very important as it represents a significant source of motor losses. However, for a switched reluctance motor having a 60 mm diameter rotor and a stator comprising four U-shaped laminated pole pair cores, an efficiency of greater than 50%, possibly approaching 75%, can be achieved with a uniform air gap of 0.2 mm to 0.3 mm.

While obtaining such a uniform air gap clearance between the stator cores and the rotor core is relatively simple when assembling motors by hand, it is time consuming and tedious making such assembly methods expensive.

Automating the process to avoid manual assembly is desired but usual automated assembly processes involve manufacturing tolerances which make achieving a uniform and consistent air gap of 0.2 to 0.3 mm impossible. The usual method of bolting the laminated cores to the bearing brackets as used in the hand assembly method could involve tolerances of 0.5 mm or more due to the clearance requirements of the bolt holes and the manufacturing tolerance of the bolt shank and/or thread. As is obvious, if the air gap is too large, the efficiency of the motor decreases, if the air gap is too small, the rotor and stator connect and the motor does not operate.

GB 968871 discloses the use of projections stamped from the bearing brackets which engage through holes or recesses in the stator core. While this is an improvement over using bolts and holes, the use of stamped projections may result in the edges of the projection being rounded, especially as the stamping die wears, resulting in unsatisfactory or increased manufacturing tolerances which may affect the air gap. Also, this requires some other arrangement for securing the stator core to the bracket. If this is a bolt, then another hole from the stator core is required reducing further the magnetic flux carrying capacity of the core. It is possible to use the same hole with the bolt passing through the projection. This requires a hole much larger than is necessary for either the bolt or for the projection alone, thereby still reducing the magnetic flux carrying capacity of the core. This could be overcome by making the core bigger, if space and material cost are not critical, but in many applications, these considerations are important.

US-A-4795931 discloses an electric motor having a stator, which includes a stator core and stator windings, and a rotor which includes a shaft and a rotor core mounted on the shaft. Bearing brackets are fixed to the stator core and support bearings to the shaft. The stator core is positioned relative to the bearing brackets by pins disposed in holes in the stator core.

### Disclosure of the Invention

There is a need for a positioning and fixing arrangement which does not significantly affect the magnetic circuit of the stator compared with prior art designs while providing good positioning allowing reliable, consistent, uniform and small air gaps between the rotor and stator cores of mass produced motors.

This is achieved in the present invention by the use of precision formed hard steel pins mating with precision formed holes in the stator core and the bearing brackets. It will be realised that the position of the rotor is determined by the shaft/bearing/bearing bracket connection and thus by positioning the stator core with respect to the bearing bracket, the stator core is positioned with respect to the rotor core.

Accordingly, the present invention provides an electric motor comprising: a stator including a stator core and stator windings; a rotor including a shaft and a rotor core mounted on the shaft, the rotor being disposed in confronting relationship with the stator across an air gap; bearing brackets fixed to the stator core and supporting bearings for the shaft; and positioning means for positioning the stator core with respect to the bearing brackets, the positioning means comprising pins disposed within holes in the stator core and bearing brackets without play and fixing means co-operating with the pins to secure the bearing brackets to the stator core, characterised in that the pins are precision formed hard steel pins and the holes are precision formed holes, and in that each bearing bracket comprises a rigid plate overmoulded with plastics material, the plastics material forming spacers to space the bearing brackets from the stator core.

By precision formed holes, we mean not only is the size of the hole controlled to within very small tolerances but also the location of the hole is controlled to within a very small tolerance with respect to the other holes and the bearing in the bearing brackets and with respect to the other holes and the pole faces in the stator core. By using precision formed pins in precision formed holes without play, the position of the parts is assured. The use of fastening means such as spring fastener nuts, welding, rivetting, etc. with the pins to secure the brackets and the stator core together means that the number and size of the holes through the stator core is kept to a minimum,

This invention has particular application to switched reluctance motors using individual U-shaped laminated pole pair cores. In such motors, the pole faces are subject to strong magnet forces which cause the pole faces to vibrate. Under severe conditions, the vibration of the pole faces can be sufficient to cause interferences between the stator core and the rotor. Hence, it is desirable to minimise or reduce the pole face vibration which can be achieved by securing the pole faces to rigid supports. This is achieved very simply by locating the holes in the core for the pins close to the pole faces allowing the pins and the bearing brackets to absorb the vibrations.

Preferably, the fixing means are spring fasteners which engage the ends of the pins to prevent the brackets being separated from the pins. Spring fasteners are preferred as they are easy to apply, are reliable and their application is easy to automate.

Preferably, the plastics material has surfaces for guiding the pins to the holes in the bearing brackets during assembly.

Preferably, the pins and the holes in the bearing brackets are round with a clearance of less than 10µm.

One embodiment of the invention will now be described, by way of example only, with reference to the accompanying drawings.

### Brief Description ofthe Drawings

Figure 1 illustrates a switched reluctance motor embodying the present invention;
Figure 2 is a partially cut-away plan view of the motor of Figure 1;
Figure 3 illustrates a stator pole pair of the motor of Figure 1; and
Figure 4 is a part sectional detail illustrating the connection between a part of a stator pole pair and end brackets of the motor of Figure 1.

### Detailed Description of the Preferred Embodiments

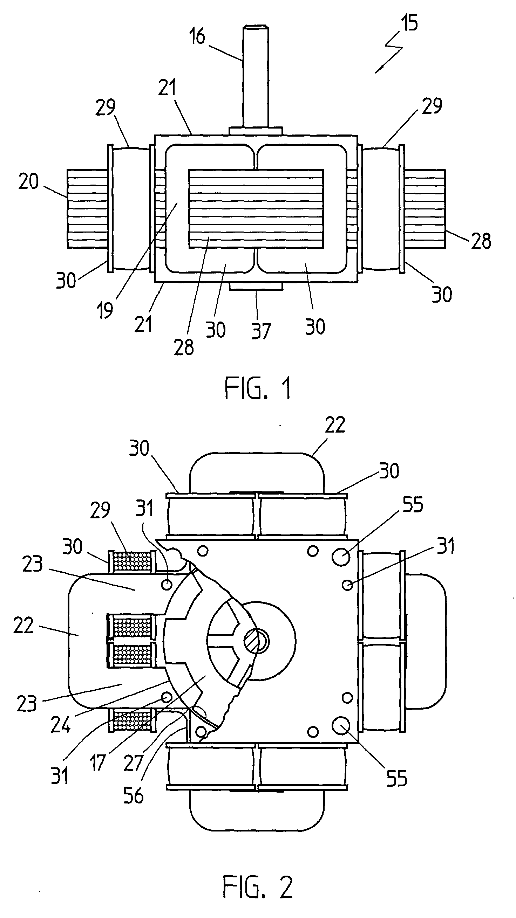

Figures 1 and 2 illustrate a switched reluctance motor 15 embodying the invention. The motor 15 has a shaft 16 supporting a rotor 17. The shaft 16 is journalled in bearings for rotatably supporting the rotor in confronting and close proximity to pole faces 24 of the stator 19. The bearings are supported by brackets 21, also known as end plates or bearing brackets, located at the axial ends of the motor 15 and held in fixed spatial relationship with each other. The stator 19 has four individual U-shaped laminated stator pole pairs 22 giving the stator eight poles 23. Each pole 23 has a pole face 24. The stator core 20 comprising the laminations 28 of the pole pairs 22, is secured in position with respect to the bearing brackets 21 by positioning means described in detail hereinafter. The positioning means extend axially of the motor to engage the bearing brackets and does not extend laterally of the pole pairs 22.

The bracket 21 at the drive end of the motor has mounting holes 55 in the corners of the bracket for fixing the motor to an appliance. The non-drive end bracket has cutouts 56 to provide access to the mounting holes 55 of the drive end bracket.

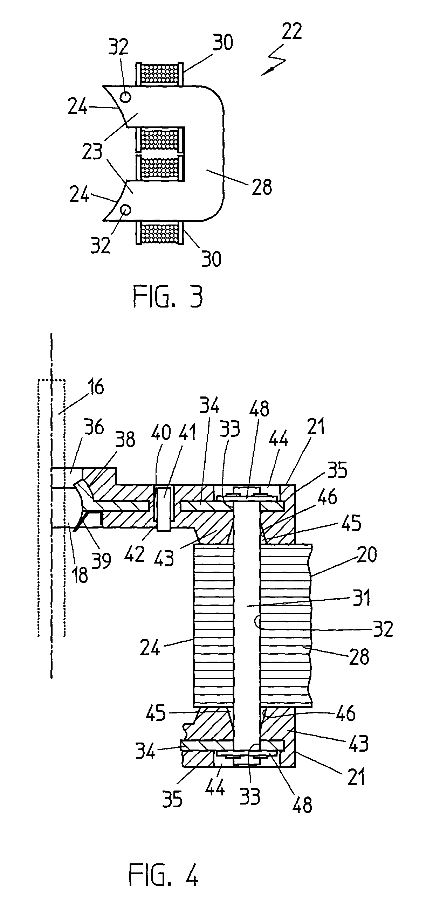

Figure 3 is a plan view of a stator pole pair 22 of the motor of Figure 1. The pole pair 22 is formed by stacking together a plurality of U-shaped laminations 28 stamped from electrical steel sheet. Each pole pair 22 has an associated stator winding 29. As shown in Figure 3, the stator winding is formed by two prewound bobbins 30 placed over respective arms or poles 23 ofthe U-shaped pole pair 22.

The positioning means include hard steel precision pins which are inserted in holes 32 formed in the arms 23 of the U-shaped pole pairs 22 in close proximity to the pole face 24, the pins and holes 32 being dimensioned to be an interference fit or at least to be fitted together substantially without play to secure the laminations 28 together and to the pins. While the preferred pins are round for ease of manufacture, this is not essential.

Figure 4 illustrates an alternative or variation of preferred positioning means according to the present invention. The most preferred arrangement is shown in Figure 4 which illustrates in partial section, the connection between the laminated core 28 of one pole pair and the bearing brackets 21. While half of the top bracket 21, as viewed, is shown for illustrative reasons, only that portion of the bottom bracket 21, as viewed, adjacent the positioning pin 31 is shown for clarity, The motor shaft 26 is shown in phantom to illustrate its relationship with the bearing 18 shown in the top bracket 21.

The bearing brackets 21 comprise a rigid plate 34 overmoulded with plastics material 35. The plate 34 may be metallic, e.g., steel or brass, but brass is preferred as it is non-magnetic and thus, does not interfere with the magnetic circuit of the motor. The plastics material is used to give the bracket an electrically insulating coating allowing electrical control circuitry to be mounted directly onto the brackets and to provide integral spacers to space the brackets from the stator core. The integral spacers have tapered inner surfaces 46 for leading the pins to tile holes in the rigid plate 34. Should the rigid plates be magnetic, then plastics material 35 is used to magnetically separate the plate 34 from the magnetic circuit of the stator by physically spacing the two parts. The pins 31 may provide a leakage path connecting the plate 34 to the stator poles 23 but this leakage can be minimised, if necessary, by selecting appropriate pin material and/or bracket material.

The brackets 21 support bearings, such as the self-aligning sleeve bearing 18 illustrated, in central openings 36. The shaft 16 of the rotor extends through the central opening 36 ofthe drive end bracket 21. At the non-drive end, the shaft 16 may extend slightly through the central opening 36 or the central opening 36 may be closed by a cap 37 (see Figure 1) formed integrally with the overmoulding 35. Each bracket 21 has a bearing retainer in the form of an outwardly extending lip 38 formed in the rigid plate 34 around the central opening 36 to receive the self-aligning bearing 18. A retaining spring 39 retains the bearing 18 in contact with the lip 38 as is well known. The top plate 34 has a cut-out or window 40 in which an electrical component of the motor control circuitry may be located. Shown is a Hall sensor 41 directly supported by the overmoulding 35 and held in position by adhesive or by the relative dimensions of the Hall sensor 41 and the aperture 42 in the overmoulding 35.

The pins 31 are plain hard steel pins precision ground in a centreless grinding machine. This gives an outside diameter to within 2.5 µm.

The rigid plate 34 has holes 33 for receiving the pins 31. The holes 33 are dimensioned to receive the pins 31 with close tolerance which may be a neat fit, a press fit or an interference fit to ensure that there is substantially no play between the pins and the brackets. If the pins 31 are an interference fit in the holes 33 of the plates 34, this may be sufficient to secure the pins 31 to the brackets 21. The holes 33 in the plate are stamped in the same operation as the forming of the bearing retainer. The diameter of the holes 33 can be precisely formed to within 2.5 µm with a similar precision in the position of the holes 33 with respect to one another and the bearing retainer. Preferably, the pins 31 are a neat fit and are then fastened to the plates 34 by spring fasteners 48 which engage the ends of the pins to secure the connection. The overmoulding 35 provides spacers 43 which bearing directly on the stator laminations 28 of the pole pairs 22 to space the rigid plate 34 from the stator core. The overmoulding 35 has apertures 44, 45 providing access to the holes 33 for the pins 31 and access to the head of the pins 31 for the spring fasteners 48. The inner apertures 45 have inclined surfaces 46 providing lead-ins to guide the pins 31 to the holes 33 in the plates 34.

The pins 31 extend axially through holes 32 in the laminated core 20 of the stator pole pairs 22. The pins 31 are preferably a press fit or interference fit in the holes 32 to fix the stator laminations rigidly to the pins 31. However, as the stator core 20 is clamped between the bearing brackets 21, neat fit holes may be used to assist insertion of the pins 31 through the stator core 20.

As will be readily apparent to the skilled addressee, the cross-sectional shape ofthe pins may be any shape including square, rectangular, elliptical, hexagonal and star-shaped. However, for ease of manufacture, pins with circular cross-sections are preferred. It is necessary, though, for the pins to ensure that the stator core is secured in position with respect to the bearing brackets as accurately as possible.

Various modifications may be made to the described embodiments and it is desired to include all such modifications as fall within the scope of the accompanying claims.

## Claims

1. An electric motor comprising:
a stator (19) including a stator core (20) and stator windings (29);
a rotor (17) including a shaft (16) and a rotor core mounted on the shaft, the rotor being disposed in confronting relationship with the stator (19) across an air gap;
bearing brackets (21) fixed to the stator core (20) and supporting bearings (18) for the shaft (16); and
positioning means for positioning the stator core (20) with respect to the bearing brackets (21), the positioning means comprising pins (31) disposed within holes (32, 33) in the stator core (20) and bearing brackets (21) without play and fixing means co-operating with the pins to secure the bearing brackets (21) to the stator core (20),
**characterised in that** the pins (31) are precision formed hard steel pins and the holes (32, 33) are precision formed holes,
and in that each bearing bracket (21) comprises a rigid plate (34) overmoulded with plastics material (35), the plastics material forming spacers (43) to space the bearing brackets (21) from the stator core (20).

2. An electric motor as defined in claim 1 **characterised in that** the motor is a switched reluctance motor (15) and the stator core (20) comprises a plurality of individual laminated pole pair cores (22) individually fixed to the bearing brackets (21).

3. An electric motor as defined in claim 2 **characterised in that** each pole pair core (22) has two pole faces (24) facing the rotor (19) and the holes (32) for the pins (31) are located in close proximity to the pole faces (24).

4. An electric motor as defined in any one of claims 1 to 3 **characterised in that** the fixing means comprises spring fasteners (48) engaging the ends of the pins (31).

5. An electric motor as defined in any one of the preceding claims **characterised in that** the plastics material (35) has surfaces (46) for guiding the pins (31) to the holes (33) in the bearing brackets (21) during assembly.

6. An electric motor as defined in any one of the preceding claims **characterised in that** the pins (31) and the holes (33) in the bearing brackets (21) are round with a clearance of less than 10*µ*m.

## Patentansprüche

1. Elektromotor, aufweisend:
einen Stator (19), der einen Statorkern (20) und Statorwicklungen (29) umfaßt;
einen Rotor (17), der eine Welle (16) und einen auf der Welle angebrachten Rotorkern umfaßt, wobei der Rotor über einen Luftspalt gegenüber dem Stator (19) angeordnet ist;
Lagerbügel (21), die an dem Statorkern (20) befestigt sind und Lager (18) für die Welle (16) tragen; und
Positioniermittel zum Positionieren des Statorkerns (20) bezüglich der Lagerbügel (21), wobei die Positioniermittel Stifte (31) aufweisen, die innerhalb der Löcher (32, 33) in dem Statorkern (20) und den Lagerbügeln (21) ohne Spiel angeordnet sind, und Befestigungsmittel aufweisen, die mit den Stiften zusammenwirken, um die Lagerbügel (21) an dem Statorkern (20) zu sichern,
**dadurch gekennzeichnet, daß** die Stifte (31) präzisionsgeformte Hartstahlstifte sind, und die Löcher (32, 33) präzisionsgeformte Löcher sind,
und daß jeder Lagerbügel (21) eine mit Kunststoffmaterial (35) übergossene, starre Platte (34) aufweist, wobei das Kunststoffmaterial Abstandsstücke (43) bildet, um die Lagerbügel (21) in einem gewissen Abstand von dem Statorkem (20) zu halten.

2. Elektromotor wie in Anspruch 1 definiert, **dadurch gekennzeichnet, daß** der Motor ein geschalteter Reluktanzmotor (15) ist, und der Statorkern (20) eine Vielzahl von einzelnen laminierten Polpaarkernen (22) aufweist, die an den Lagerbügeln (21) einzeln befestigt sind.

3. Elektromotor wie in Anspruch 2 definiert, **dadurch gekennzeichnet, daß** jeder Polpaarkern (22) zwei Polflächen (24) hat, die dem Rotor (19) gegenüberliegen, und die Löcher (32) für die Stifte (31) in nächster Nähe der Polflächen (24) gelegen sind.

4. Elektromotor wie in irgendeinem der Ansprüche 1 bis 3 definiert, **dadurch gekennzeichnet, daß** die Befestigungsmittel Federbefestigungen (48) aufweisen, die in die Enden der Stifte (31) eingreifen.

5. Elektromotor wie in irgendeinem der vorhergehenden Ansprüche definiert, **dadurch gekennzeichnet, daß** das Kunststoffmaterial (35) Oberflächen (46) hat, um beim Zusammenbau die Stifte (31) zu den Löchern (33) in den Lagerbügeln (21) hin zu führen.

6. Elektromotor wie in irgendeinem der vorhergehenden Ansprüche definiert, **dadurch gekennzeichnet, daß** die Stifte (31) und die Löcher (33) in den Lagerbügeln (21) mit einem Zwischenraum von weniger als 10µm rund sind.

## Revendications

1. Moteur électrique comprenant:
un stator (19) englobant un noyau de stator (20) et des enroulements de stator (29);
un rotor (17) englobant un arbre (16) et un noyau de rotor monté sur l'arbre, le rotor étant disposé dans une relation de face-à-face avec le stator (19) à travers un entrefer;
des supports de paliers (21) fixés au noyau de stator (20) et des paliers de support (18) pour l'arbre (16); et
des moyens de positionnement pour positionner le noyau de stator (20) par rapport aux supports de paliers (21), les moyens de positionnement comprenant des broches (31) disposées dans des trous (32, 33) dans le noyau de stator (20) et dans les supports de paliers (21) en l'absence de jeu, ainsi que des moyens de fixation coopérant avec les broches pour fixer les supports de paliers (21) au noyau de stator (20);
**caractérisé en ce que** les broches (31) représentent des broches en acier dur façonnées avec précision et les trous (32, 33) sont des trous façonnés ayec précision,
et en ce que chaque support de palier (21) comprend une plaque rigide (34) recouverte par moulage avec une matière élastique (35), la matière plastique formant des écarteurs (43) pour écarter les supports de paliers (21) du noyau de stator (20).

2. Moteur électrique tel que défini à la revendication 1, **caractérisé en ce que** le moteur est un moteur à réluctance commutée (15) et le noyau de stator (20) comprend plusieurs noyaux à paires polaires stratifiés individuels (22) fixés de manière individuelle aux supports de paliers (21).

3. Moteur électrique tel que défini à la revendication 2, **caractérisé en ce que** chaque noyau à paires polaires (22) possède deux faces polaires (24) opposées au rotor (19) et les trous (32) pour les broches (31) sont disposés à proximité étroite des faces polaires (24).

4. Moteur électrique tel que défini dans l'une quelconque des revendications 1 à 3, **caractérisé en ce que** les moyens de fixation comprennent des fixateurs à ressort (48) entrant en contact avec les extrémités des broches (31).

5. Moteur électrique tel que défini dans l'une quelconque des revendications précédentes, **caractérisé en ce que** la matière plastique (35) possède des surfaces (46) pour guider les broches (31) en direction des trous (33) dans les supports de paliers (21) au cours de l'assemblage.

6. Moteur électrique tel que défini dans l'une quelconque des revendications précédentes, **caractérisé en ce que** les broches (31) et les trous (33) dans les supports de paliers (21) sont de forme ronde avec un jeu inférieur à 10 µm.
